# DEMANDE DE BREVET EUROPEEN

(11) **EP 0 713 085 A2**
(43) Date de publication de la demande: **22.05.1996**
(21) Numéro de dépôt: 95402561.5
(22) Date de dépôt: 15.11.1995
(51) Int. Cl.: G01M 11/06

(54) **Dispositif indicateur de l'orientation du faisceau lumineux d'un projecteur de véhicule automobile**

(30) Priorité: 16.11.1994 FR 9413703
(71) Demandeur: VALEO VISION, F-93000 Bobigny (FR)
(72) Inventeur: Audias, Georges, c/o ZI de la Paluc, F-86104 Chatellerault (FR); Gardais, Didier, c/o ZI de la Paluc, F-86104 Chatellerault (FR)
(74) Mandataire: Le Forestier, Eric

(57) **Abrégé**

Un dispositif indicateur de l'orientation d'un faisceau lumineux émis par un projecteur de véhicule automobile comprend :
une ossature (100) comportant des moyens de guidage (120, 121) en direction généralement verticale, et
une unité optique (200) montée sur les moyens de guidage de façon réglable en hauteur, ladite unité optique comprenant une lentille (210) et un écran de projection (224) disposé transversalement à l'axe optique de la lentille.

l'écran de projection est monté sur un support (220) capable de coulisser selon une direction généralement parallèle audit axe optique.

Selon l'invention, ce coulissement selon l'axe optique permet à l'écran de projection d'occuper sélectivement une position escamotée, de rangement, et une position dégagée, d'utilisation, dans laquelle l'écran est éloigné de la lentille.

Application au réglage des faisceaux en atelier.

## Description

La présente invention concerne un dispositif de réglage en atelier d'un faisceau de projecteur de véhicule automobile.

on connaît déjà un dispositif pour l'indication de l'orientation d'un faisceau lumineux émis par un projecteur de véhicule automobile qui comprend une ossature comportant des moyens de guidage en direction généralement verticale, et une unité optique montée sur les moyens de guidage de façon réglable en hauteur pour être amenée devant un projecteur, ladite unité optique comprenant une lentille et un écran de projection disposé transversalement à l'axe optique de la lentille.

Un tel dispositif, monté par exemple sur roulettes, est placé devant l'un des projecteurs, le parallélisme étant assuré par exemple par des moyens de calage venant s'appuyer contre les roues avant du véhicule.

Le projecteur étant allumé, la hauteur de l'unité optique est réglée de manière à obtenir la meilleure image du faisceau projeté sur l'écran de projection. Des repères (en particulier lignes de coupure) formés sur l'écran permettent d'indiquer si le faisceau lumineux est correctement réglé (généralement en site), et l'on actionne éventuellement les moyens de réglage prévus sur le projecteur pour corriger un réglage défectueux.

Un défaut des dispositifs indicateurs connus réside dans le fait qu'ils sont relativement encombrants. En effet, pour obtenir une bonne image du faisceau, il est souhaitable de recourir à une lentille convergente dont la longueur focale soit la plus importante possible. Or cette longueur focale détermine la distance entre la lentille et l'écran, et une bonne image requiert donc un emcombrement axial important pour l'unité optique.

Par ailleurs, les dispositifs connus, qui sont utilisés dans des environnements difficiles (ateliers d'entretien ou de réparation de véhicules), sont sujets à des heurts, encrassements, etc...., qui compromettent la qualité de l'image formée, voire sa précision, auquel cas le dispositif devient inutilisable.

On connaît en outre par EP-A-0 547 269 un dispositif indicateur selon le préambule de la revendication 1.

Toutefois, ce dispositif est nécessairement encombrant, car il nécessite un boîtier abritant l'écran de projection et permettant à l'écran d'occuper sa position la plus éloignée par rapport à la lentille.

La présente invention vise à pallier ces inconvénients de la technique antérieure, et en particulier à tirer parti du coulissement horizontal du support d'écran pour diminuer l'encombrement du dispositif lorsqu'il n'est pas utilisé tout en autorisant une distance importante, en utilisation, entre la lentille et l'écran, c'est-à-dire une longieur focale importante pour la lentille.

Elle propose à cet effet un dispositif indicateur tel que défini dans la revendication 1.

Des aspects préférés, mais non limitatifs, du dispositif selon l'invention sont définis dans les sous-revendications.

D'autres aspects, buts et avantages de la présente invention apparaîtront mieux à la lecture de la description détaillée suivante de formes de réalisation préférées de celle-ci, donnée à titre d'exemple non limitatif et faite en référence au dessin annexé, sur lequel :
la figure 1 est une vue en élévation de côté d'un dispositif indicateur selon une forme de réalisation de l'invention, illustrant deux positions possibles de l'unité optique,
la figure 2 est une vue en élévation de face du dispositif de la figure 1,
la figure 3 est une vue partielle en coupe horizontale selon la ligne III de la figure 1, et
la figure 4 est une vue en perspective du dispositif en cours d'utilisation devant un projecteur de véhicule automobile.

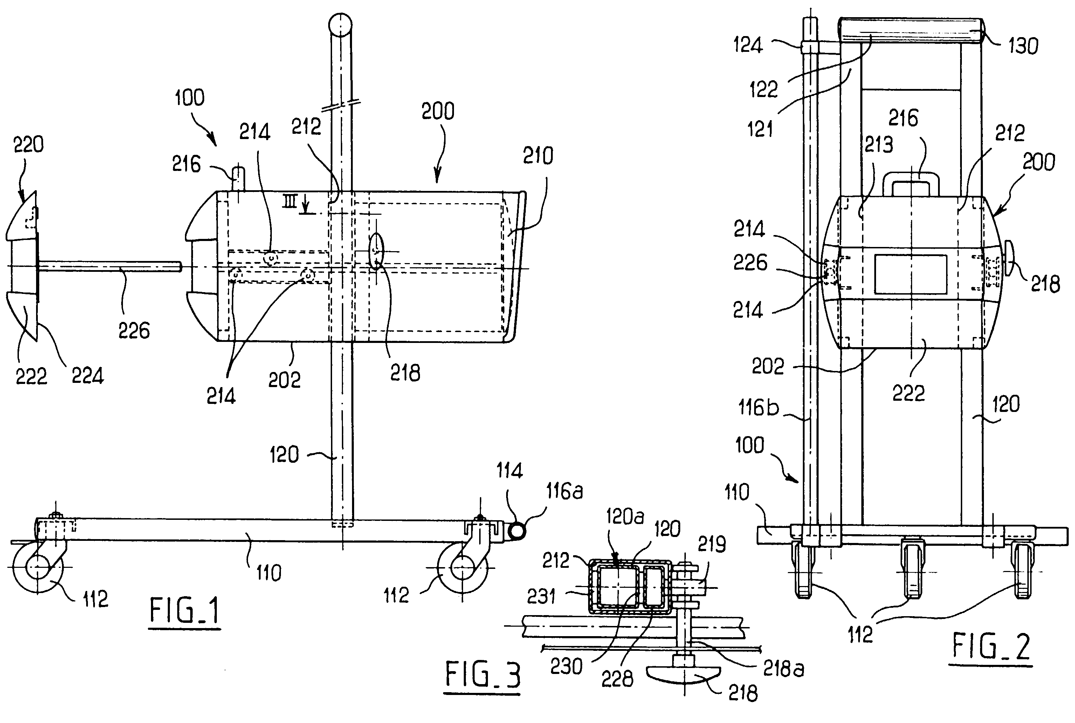

En référence tout d'abord aux figures 1 et 2, on a représenté un dispositif indicateur de l'orientation, en particulier en site, du faisceau lumineux émis par un projecteur de véhicule automobile.

Il comprend un support 100 sur lequel est montée de façon réglable en hauteur une unité optique 200.

Le support 100 comprend un plateau inférieur rectangulaire 110 sous lequel sont montées trois roulettes 112. Ce plateau permet par exemple de poser des outils.

A partir des grands bords du plateau s'étendent deux montants verticaux 120, 121.

L'unité optique 200 comprend un boîtier creux 202 de section verticale essentiellement rectangulaire, avec des bords latéraux bombés.

L'unité optique comprend une ossature qui définit deux passages verticaux 212, 213 pour les montants 120, 121, et des moyens que l'on décrira plus loin pour immobiliser à une hauteur souhaitée l'unité optique. Afin d'assurer un bon glissement de l'unité optique, l'un des passages comprend une garniture en matière plastique de glissement, entourant étroitement le montant et permettant de lui donner, dans un plan horizontal, une position de référence. L'autre passage comporte, comme on le verra plus loin, des moyens de blocage de l'unité optique 200 à la hauteur souhaitée.

Le boîtier 202 de l'unité optique est fermé d'un côté par une lentille convergente 210. Afin d'assurer une bonne qualité optique du dispositif, la lentille est de préférence réalisée en verre et présente une longueur focale importante, de l'ordre de 900 mm, et un diamètre également important, de l'ordre de 260 mm.

La lentille est de préférence fixée sur le boîtier 202 par l'intermédiaire de patins en matière plastique ou élastomère, formant amortisseurs.

Du côté opposé à la lentille, le boîtier 202 peut être fermé par un ensemble coulissant, globalement indiqué en 220, qui comporte un couvercle 222 et deux tiges cylindriques horizontales 226 s'étendant sensiblement à mi-hauteur à partir des bords latéraux du couvercle 222.

Sur sa face, généralement plane, tournée vers le boîtier 202, le couvercle 222 comporte un écran plan 224 d'un faisceau lumineux émis par un projecteur devant lequel le dispositif est placé.

L'écran 224, de façon connue en soi, comporte des repères permettant de déterminer si le faisceau est correctement orienté notamment en site.

Les deux tiges cylindriques 226 sont guidées horizontalement dans le boîtier 202 à l'aide de deux groupes de trois galets 214 montés sur l'ossature du boîtier.

De façon préférée, afin d'éviter tout jeu susceptible de faire varier la position de l'écran, on prévoit au niveau de ces galets des moyens de rattrapage de jeux, notamment par une sollicitation élastique de l'un des galets.

Comme on l'observe sur la figure 1, l'ensemble coulissant 220 est capable d'occuper une première position ou position fermée (vers la droite sur la figure), dans laquelle le couvercle 222 vient obturer l'extrémité ouverte du boîtier 202 opposée à la lentille 210, et une seconde position ou position ouverte (vers la gauche sur la figure), dans laquelle l'écran de projection 224 est situé à une distance de la lentille égale à sa longueur focale, et dans laquelle le dispositif peut être utilisé pour projeter le faisceau formé par un projecteur de véhicule automobile sur l'écran 224.

Pour assurer que l'écran occupe bien la position ouverte, et donc que l'image formée sur l'écran soit la plus nette possible, on prévoit avantageusement des moyens de butée coopérant avec les tiges 226 pour déterminer une position de fin de course de l'ensemble coulissant. On peut prévoir en variante des moyens de calage à bille, cliquet ou analogue.

On peut également prévoir, de façon non illustrée, des moyens élastiques sollicitant l'ensemble coulissant vers sa position ouverte. Dans ce cas, l'escamotage de l'ensemble coulissant s'effectue à l'encontre de l'effort délivré par ces moyens élastiques, et un verrouillage est prévu entre le couvercle 222 et le boîtier 202 pour maintenir le couvercle en position fermée.

En variante, pour améliorer la stabilité de position de l'écran 224, on réalise le guidage de l'ensemble coulissant à l'aide de trois ou quatre tiges.

Dans tous les cas, on donne aux tiges une position périphérique afin de ne pas faire obstacle au trajet de la lumière dans l'unité optique.

Pour faciliter le déplacement vertical de l'unité optique 200, on prévoit avantageusement dans les montants 120, 121 (réalisés à l'aide de profilés métalliques creux) des moyens élastiques servant à créer une force s'opposant à la force de gravité exercée sur l'unité optique, ces deux forces s'équilibrant pour une hauteur de l'unité optique correspondant à une hauteur typique d'un projecteur de véhicule automobile. Ces moyens élastiques peuvent consister en des ressorts s'étendant à l'intérieur des montants et fixés à l'unité optique au niveau de pattes solidaires de cette dernière et pénétrant à l'intérieur des montants par l'intermédiaire de fentes longitudinales telles que 120a (figure 3) courant sur toute la hauteur des montants.

En variante, on peut prévoir un mécanisme à câbles et contrepoids.

Comme on l'a indiqué plus haut, à l'un des montants 120, 121 est associé un mécanisme de blocage de l'unité optique à la hauteur souhaitée. Ce mécanisme, en référence maintenant à la figure 3, comporte une poignée 218 située à l'extérieur du boîtier et solidaire d'un axe 219a monté à rotation sur l'ossature de l'unité optique 200 et entraînant une came 219 qui sollicite un élément intermédiaire 228. Ce dernier sollicite lui-même, par l'intermédiaire d'un patin en élastomère 230, la face en vis-à-vis du montant 120. La face opposée du montant 120 prend appui contre la paroi homologue du passage 212 par l'intermédiaire d'un autre patin 231 en matière plastique.

De cette manière, par une rotation par exemple quart-de-tour de la poignée 218, on effectue par le jeu des frottements entre le patin 230 et le montant 120 un blocage de l'unité optique 200 à la hauteur souhaitée.

En variante, on peut utiliser deux mécanismes de blocage, un par montant.

De nouveau en référence à la figure 2, les montants 120, 121 sont réunis à leur extrémité supérieure par une traverse 130 qui maintient l'entraxe des montants et permet l'accrochage des ressorts mentionnés plus haut pour la compensation du poids de l'unité optique.

Une poignée 216 permet d'effectuer la manoeuvre verticale de l'unité optique 200. Cette poignée peut être supprimée lorsqu'il est prévu deux mécanismes de blocage, auquel cas cette manoeuvre est effectuée par les deux poignées tournantes 218 situées de part et d'autre du boîtier 202.

On observera ici que le couvercle 222 peut être réalisé sous la forme d'un boîtier creux. Dans le cas où l'écran est associé à des moyens photosensibles de mesure de la lumière projetée sur l'écran, le couvercle 222 peut alors abriter la circuiterie électronique d'alimentation électrique et de traitement des signaux, et incorporer un connecteur d'interface avec un ordinateur.

On note également que dans l'épaisseur du plateau 110 du support est montée coulissante une tige 114 orientée parallèlement à l'axe optique de l'unité optique 200. Cette tige 114 porte à son extrémité libre une autre tige 116a horizontale et perpendiculaire à la tige 114.

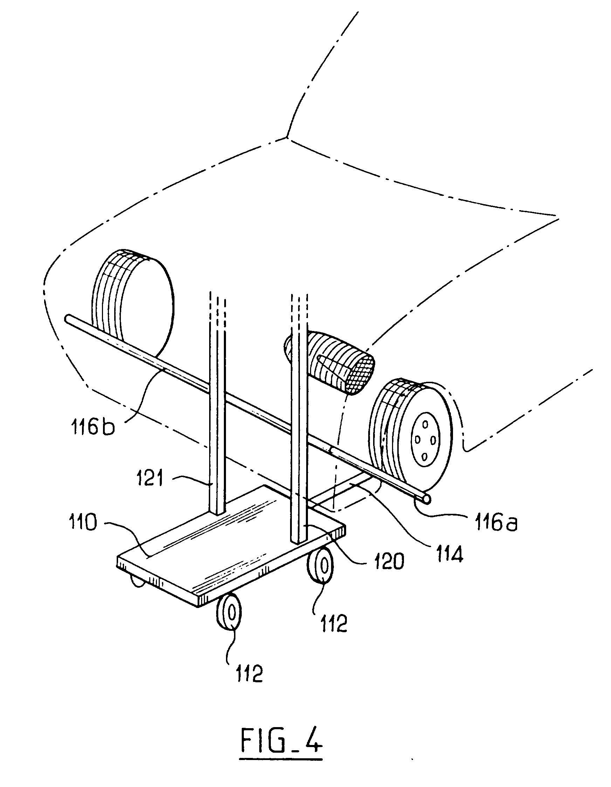

Maintenant en référence à la figure 4, on observe que la tige 116a peut recevoir d'un côté ou de l'autre, par exemple par emboîtement ou vissage, un prolongateur 116b s'étendant coaxialement avec lui. En appliquant la barre transversale ainsi obtenue devant les roues du véhicule, on assure le parallélisme de l'unité optique 200, de telle sorte que son axe optique (axe de la lentille 210) soit parallèle à l'axe longitudinal du véhicule.

Pour le rangement du dispositif, on démonte le prolongateur 116b et l'on fixe celui-ci sur un support 124 prévu à l'extrémité supérieure du montant 121.

Ainsi on propose un dispositif indicateur pour régler en atelier l'orientation des faisceaux de véhicules automobiles qui présente une bonne qualité d'image, avec une focale importante, et qui, en position de rangement (position fermée du couvercle 222), occupe un faible encombrement, avec en outre une bonne protection notamment de l'écran 224 vis-à-vis des poussières et des salissures.

Bien entendu, la présente invention n'est nullement limitée aux formes de réalisation décrites et représentées, mais l'homme de l'art saura y apporter toute variante ou modification conforme à son esprit.

## Revendications

1. Dispositif indicateur de l'orientation d'un faisceau lumineux émis par un projecteur de véhicule automobile, comprenant :
une ossature (100) comportant des moyens de guidage (120, 121) en direction généralement verticale,
une unité optique (200) montée sur les moyens de guidage de façon réglable en hauteur pour être amenée devant un projecteur, ladite unité optique comprenant une lentille (210) et un écran de projection (224) disposé transversalement à l'axe optique de la lentille, l'écran de projection étant monté sur un support (220) capable de coulisser selon une direction généralement parallèle audit axe optique,
caractérisé en ce que ledit coulissement selon une direction généralement parallèle audit axe optique permet à l'écran de projection d'occuper sélectivement une position escamotée, de rangement, et une position dégagée, d'utilisation, dans laquelle l'écran est éloigné de la lentille.

2. Dispositif selon la revendication 1, caractérisé en ce que l'unité optique (200) comprend un boîtier (202) fermé au niveau d'une ouverture frontale par ladite lentille (210) et fermé au niveau d'une ouverture postérieure par ledit support d'écran (220) lorsqu'il occupe sa position escamotée, pour ainsi protéger l'unité optique.

3. Dispositif selon la revendication 2, caractérisé en ce que en ce que le support d'écran (220) comporte un couvercle (222) monté sur l'unité optique (200) par l'intermédiaire d'au moins une tige (226) coulissant entre des galets (214) montés dans l'unité optique (200).

4. Dispositif selon la revendication 3, caractérisé en ce que le couvercle (222) présente la forme d'un corps creux apte à recevoir une circuiterie électronique d'alimentation et de traitement de signaux de moyens photosensibles associés à l'écran (224).

5. Dispositif selon l'une des revendications 1 à 4, caractérisé en ce qu'il est prévu des moyens de butée pour définir de façon précise la position dégagée dudit support (220) d'écran.

6. Dispositif selon l'une des revendications 1 à 5, caractérisé en ce que la lentille (210) est en verre et montée sur un support amortisseur.
